# EUROPÄISCHE PATENTSCHRIFT

(11) **EP 1 019 997 B1**
(45) Veröffentlichungstag und Bekanntmachung des Hinweises auf die Patenterteilung: **11.12.2002**
(21) Anmeldenummer: 98954232.9
(22) Anmeldetag: 28.09.1998
(51) Int. Cl.: H02H 3/04, H01H 9/16

(54) **VERFAHREN ZUR ÜBERWACHUNG VON ZUSTANDSPARAMETERN BEI EINEM SCHALTGERÄT UND ZUGEHÖRIGE EINRICHTUNG**
METHOD FOR MONITORING STATUS PARAMETERS IN A SWITCHING MECHANISM, AND CORRESPONDING DEVICE
PROCEDE DE SURVEILLANCE DE PARAMETRES D'ETAT DANS UN APPAREIL DE COMMUTATION, ET DISPOSITIF UTILISE A CET EFFET

(30) Priorität: 01.10.1997 DE 19743499
(43) Veröffentlichungstag der Anmeldung: 19.07.2000
(73) Patentinhaber: SIEMENS AKTIENGESELLSCHAFT, 80333 München (DE)
(72) Erfinder: POHL, Fritz, D-91334 Hemhofen (DE)
(86) Internationale Anmeldenummer: DE9802871
(87) Internationale Veröffentlichungsnummer: WO99018645

(56) Entgegenhaltungen:
- WO-A-96/07192
- DE-A- 2 813 451
- DE-A- 3 609 430
- DE-A- 19 707 729

## Beschreibung

Die Erfindung bezieht sich auf ein Verfahren zur Überwachung der Zustandsparameter bei einem Schaltgerät. Daneben bezieht sich die Erfindung auf die zugehörige Einrichtung zur Durchführung dieses Verfahrens.

Aus der WO 96 07 192 A2 ist ein Schaltgerät mit Mitteln zur Erkennung von Schaltzuständen vorbekannt. Bei solchen Schaltgeräten, beispielsweise Leistungsschaltern, können durch eine geeignete Sensorik verschiedenste Zustandsparameter, wie beispielsweise die Schaltstellung 'Ein' oder 'Aus', erfaßt werden. Weiterhin ist auch die Möglichkeit gegeben, daß spezifischen Auslöseursachen des Schaltgerätes, wie beispielsweise 'Kurzschluß' oder 'Überstrom' bzw. auch allgemeine Gerätestörungen, wie 'Schaltkontakte verschweißt' erfaßt werden. Vorteilhaft ist dabei, daß die Sensoren innerhalb eines eigenen Sensorgehäuses an geeigneter Stelle angebracht sein können, wobei das Sensorgehäuse beispielsweise seitlich an das Schaltgerätegehäuse ankoppelbar ist und daß weder eine mechanische oder optische Wirkverbindung noch eine elektrische Leitungsverbindung vom Schaltgerätegehäuse und/oder den daran angeschlossenen Netzleitern in das Innere des Sensorgehäuses notwendig ist. Angestrebt wird dabei, daß im Rahmen von kommunikationsfähigen Schaltgeräten die überwachten und erfaßten Schaltzustände beispielsweise über ein Bussystem verarbeitet und zentral gemeldet werden können.

Die in der Praxis bisher eingesetzten Einrichtungen zur Schaltgeräteüberwachung, beispielsweise Hilfsschalter und Fehlersignalschalter bei Leitungsschutzschaltern oder Kurzschlußmeldeschalter bei Leistungsschaltern, arbeiten durchweg elektromechanisch und sind demzufolge gegen elektromagnetische Störeinflüsse unempfindlich. Probleme ergeben sich hier allenfalls erst aus der Umsetzung der elektrischen Kontaktsignale in bus- und elektronikkompatible Steuersignale. Wenn jedoch spezifische elektrische Sensoren verwendet werden liegt entsprechend den verwendeten Sensoren je nach Sensorprinzip eine unterschiedliche Störcharakteristik vor. Diese Sensoren müssen jeweils gegen spezifische Störungen geschützt werden.

Aufgabe der Erfindung ist es daher, das bekannte Verfahren zur Überwachung von Zustandsparametern derart zu ergänzen, daß eine sichere Anzeige des Schaltzustandes gewährleistet ist, und eine zugehörige Einrichtung zu schaffen.

Die Aufgabe ist bei einem Verfahren der eingangs genannten Art durch die Maßnahmen des Patentanspruches 1 gelöst. Eine zugehörige Einrichtung ist durch den Patentanspruch 4 gekennzeichnet. Vorteilhafte Weiterbildungen des erfindungsgemäßen Verfahrens und der zugehörigen Einrichtung sind in den jeweils abhängigen Ansprüchen angegeben

Aus der DE 28 13 451 A1 war es zwar bereits bekannt, zur Abfrage des Schaltzustandes eine Schaltung zur Unterdrückung von Störzuständen zu verwenden, bei der durch eine getaktete Abfrage Zustände in ein erstes Schieberegister geschrieben werden und bei Vorliegen bestimmter Bedingungen dieser Zustand in ein zweites Schieberegister überführt wird. Es kann dabei nur der stationäre Einschaltzustand eines Schaltgerätes überprüft werden.

Demgegenüber erfolgt beim erfindungsgemäßen Verfahren vorteilhafterweise gleichermaßen eine Bearbeitung von stationären und instationären, d.h. transienten, Signalen, wobei aus den gestörten Signalen nach deren Verifizierung und Bearbeitung ungestörte Signale zur weiteren Auswertung bereitgestellt werden. Bei der zugehörigen Einrichtung sind dafür Mittel für eine passive Entstörung einerseits und eine aktive Entstörung andererseits vorhanden. Die Mittel für eine passive Entstörung sind vorzugsweise geeignete Abschirmmaßnahmen, während die Mittel für eine aktive Entstörung vorzugsweise eine elektronische Schaltung sind. Vorteilhafterweise können dabei durch die Kombination einer passiven Entstörung mit einer aktiven Entstörung Störereignisse mit ausreichender Stärke innerhalb eines vorgegebenen Zeitintervalles beendet werden.

Im Rahmen der Erfindung ist es möglich, daß die von der Sensorik erfaßten Änderungen der Zustandsparameter vorübergehend gespeichert werden und bei der Erkennung einer Störung innerhalb eines vorgebbaren Zeitintervalles die alten Werte der Zustandsparameter beibehalten werden. Damit wird sichergestellt, daß bei der weiteren Kommunikation keine unrichtigen Aussagen über die Zustandsparameter verarbeitet werden.

Besonders vorteilhaft ist bei der Erfindung, daß durch die Kombination von passiver und aktiver Entstörung eine selektive Bewertung der charakteristischen Vorgänge möglich wird. Dies ist sowohl in der Einfachheit und der Zuverlässigkeit bei der Entstörung stationärer Sensorsignale als auch bei der komplexen Form der Entstörung der transienten Sensorsignale gegeben. Damit ist insbesondere gegenüber den bisher verwendeten Konzepten, die mit Reflexlichtschranken arbeiten, ein beachtlicher Fortschritt erzielt. Für die Zukunft kommt der Entstörung von Sensorschaltungen bei Anwendungen in der Schalttechnik eine besondere Bedeutung zu.

Weitere Einzelheiten und Vorteile der Erfindung ergeben sich aus der nachfolgenden Figurenbeschreibung von Ausführungsbeispielen anhand der Zeichnung in Verbindung mit den Patentansprüchen. Es zeigen jeweils schematisch
- Figuren 1 und 2: eine Einrichtung zur Überwachung von Zustandsparametern mit einem Schaltgerät mit Sensoren und dafür geeigneten Abschirmmaßnahmen,
- Figur 3: eine Entstörschaltung zur Speicherung eines Zustandssignals, wenn sich dieses bei zwei hintereinander folgenden Setzpulsen nicht ändert, wobei als Setzpuls ein Kommando zur Speicherung des Signals verstanden wird,
- Figur 4: eine Entstörschaltung zur Speicherung eines Zustandssignals, wenn sich dieses bei fünf hintereinander folgenden Setzpulsen nicht ändert,
- Figur 5: eine Entstörschaltung zur Speicherung eines Kurzschlußereignisses bei einer Close-Open- oder einer Open-Kurzschlußausschaltung und
- Figur 6: eine Schaltung zur Schaltzustandserkennung eines bekannten Schalters.

Gleiche bzw. gleichwirkende Teile haben in den Figuren gleiche Bezugszeichen. Die Figuren werden teilweise gemeinsam beschrieben.

Als Schaltgeräte werden im vorliegenden Fall insbesondere Leistungsschalter betrachtet. Für solche Schalter in der WO 96 07 192 A1 wurden bereits Anordnungen vorgeschlagen, die eine Erfassung des Schaltgerätezustandes ermöglichen.

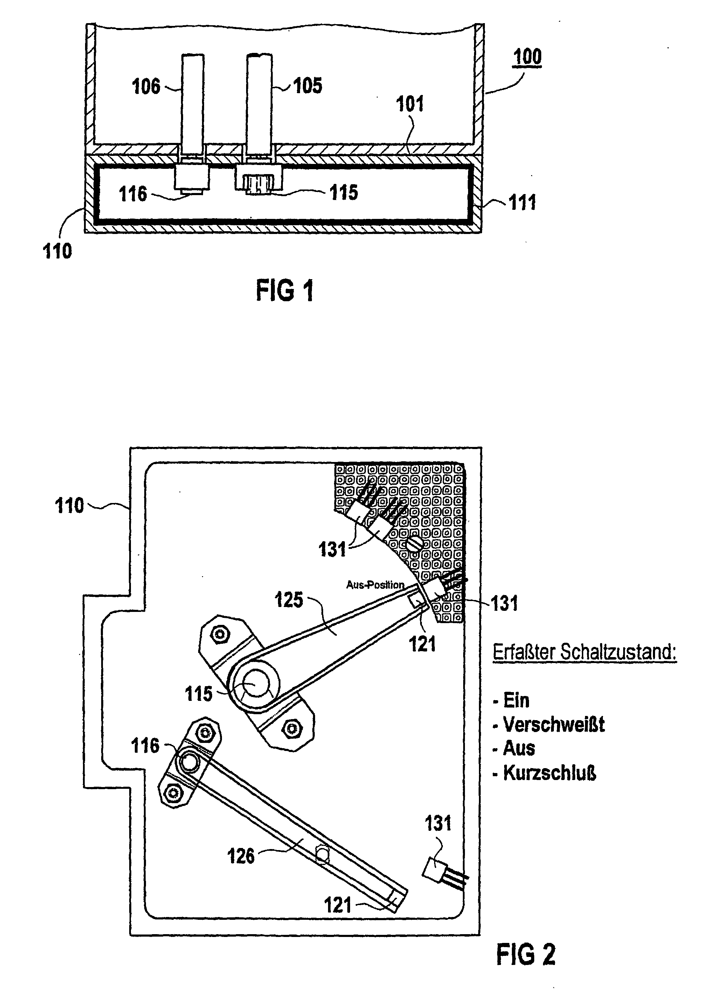

In Figur 1 bedeutet 100 ein nicht im einzelnen dargestelltes Schaltgerät, das in unterschiedlichster Ausbildung vom Stand der Technik vorbekannt ist. An einer Seite 101 des Schaltgerätes ist ein Gehäuse 110 angebaut, das auf der Anbauseite zwei zylindrische Durchführungen enthält, aus denen Verbindungswellen 115, 116 zur Ankopplung einerseits an die Schaltwelle 105 und andererseits an die Kurzschlußauslösewelle 106 hervorragen. Das Gehäuse 110 bildet ein vom Schaltgerätegehäuse abnehmbares Bauteil, welches nur über die Verbindungswellen 115 und 116 gekoppelt ist.

Entsprechend Figur 2 sind im Gehäuse 110 Drehhebel 125 und 126 vorhanden, die mit den Wellen 105 und 106 fest verbunden sind und an ihrem freien Ende jeweils Permanentmagnete 121 tragen. Den Permanentmagneten 121 sind im Gehäuse an geeigneter Stelle Magnetfeldsensoren 131 zugeordnet, die jeweils nach Stellung der Drehhebel 125 bzw. 126 elektrische Signale erzeugen, die für einen bestimmten Schaltzustand des Schaltgerätes 100 charakteristisch sind. Damit können die Funktion "Elektrisch Ein-Aus", "Kurzschluß" oder auch "Verschweißt" erkannt und angezeigt werden.

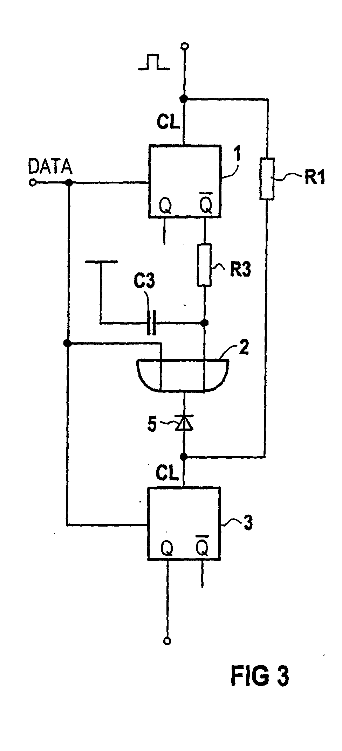

Insbesondere aus Figur 1 ist ersichtlich, daß das Gehäuse 110 einen innenliegenden Abschirmbecher 111 zur Aufnahme zumindest der Sensorik 121, 131 aufweist. Gleichermaßen kann die nachfolgend anhand der Figuren 3 bis 6 im einzelnen beschriebene Auswerteelektronik ebenfalls innerhalb des Abschirmbechers 111 angeordnet sein.

Die für letzteren Zweck verwendeten Sensoren haben je nach Sensorprinzip eine unterschiedliche Störcharakteristik und müssen gegen spezifische Störungen geschützt werden. Beispielsweise können Magnetfeldsensoren durch das Magnetfeld von Permanentmagneten oder stromdurchflossenen Leitern gestört werden, während optoelektronische Sensoren insbesondere auf elektromagnetische Störfelder, wie beispielsweise Schaltspannungen ansprechen.

Eine erste Entstörmaßnahme ist daher im allgemeinen das Abschirmen der verwendeten Sensoren und der zugehörigen Auswerteschaltung sowie die Verwendung geschirmter Leitungsverbindungen. Mit derartigen Abschirmmaßnahmen können zwar Störwirkungen abgeschwächt werden, es gelingt jedoch in der Regel nicht, sehr starke Störungen zu unterdrücken. Insbesondere bei der Schaltzustandserkennung für einen Leistungsschalter ist es allerdings notwendig, die dort vorteilhafterweise eingesetzte Magnetosensorik gegen Magnetfelder benachbarter, kurzschlußschaltender Leistungsschalter zu schützen. Im Kurzschlußfall können beispielsweise Kurzschlußströme von 20 kA bei einem Abstand der Strombahn zum Sensor von 2 bis 5 cm ein Magnetfeld von etwa 0,1 T erzeugen. Da die Ansprechschwelle solcher Sensoren bei üblicherweise ca. 1 mT liegt, reichen passive Abschirmmaßnahmen nicht aus. Es sind darüber hinaus elektronisch aktive Entstörmaßnahmen für die Sensorik notwendig.

Es wird daher vorgesehen, neben der passiven Entstörung gemäß den Figuren 1 und 2 zusätzlich mit einer geeigneten Entstörlogik die erhöhte Störfestigkeit durch eine elektronisch aktive Entstörung der Sensorik zu gewährleisten. Wesentlicher Punkt ist dabei, daß sich im ungestörten Betrieb der Sensorik bestimmte, der Funktion des Schaltgerätes folgende Signalmuster ergeben, deren zeitlicher Verlauf sich durch die Störeinflüsse signifikant verändert. Dabei ist wesentlich, daß durch die passive Störfestigkeit infolge der geeigneten Abschirmungen die notwendige Störstärke nur von kurz dauernden Ereignissen stammen kann. So muß beispielsweise der Kurzschlußstrom in einer benachbarten Strombahn > 2 kA sein, um den Sensor zum Ansprechen zu bringen, was zu einer Kurzschlußdauer von sicher < 100 ms führt. Dieses Zeitmaß wird bei der anhand der Figuren 3 bis 5 beschriebenen Entstörmethode zur elektronischen aktiven Entstörung benutzt. Gemeinsam ist den Figuren jeweils eine Schaltung aus Eingangs-Flip-Flops 1, 1' ..., und Eingangsgliedern 2, 2'... und Ausgangs-Flip-Flops 3, 3'... die mit entsprechenden Widerständen R und Kapazitäten verschaltet sind. Die Setzpulse ergeben am Ausgang die gewünschte Aussage.

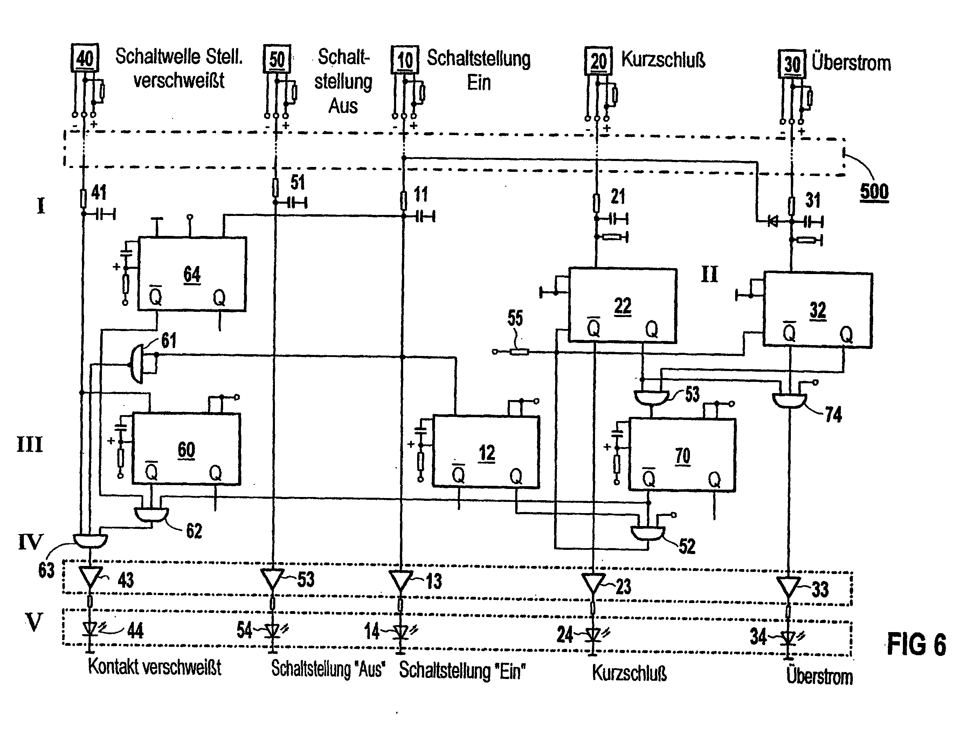

Speziell in Figur 6 ist dargestellt, wie die einzelnen Aussagen Schaltstellung 'Aus' oder Schaltstellung 'Ein', 'Kurzschluß' oder 'Überstrom' sowie die Funktion Schaltwelle in 'Stellung verschweißt' parallel ausgewertet werden können. Dabei zeigt jeweils der Bereich I der elektronischen Schaltung die Impulsformung mit einer RC-Dämpfung von Spannungsspitzen, der Bereich II die elektronische Speicherung transienter Zustandssignale mit dem D-Flip-Flop für Kurzschluß und Überstrom, der Bereich III die Zeitglieder für zeitbegrenzte Ansteuerung und Signalverknüpfung, der Bereich IV die UND-NAND-Schaltglieder für Signalverknüpfung und der Bereich V die optische Zustandsanzeige. Letztere Figur lehnt sich an Figur 3 der WO-A-9607192 an, worauf weiter unten noch eingegangen wird.

Am Beispiel der Schaltzustandserkennung an einem Leistungsschalter werden die vorbeschriebenen Maßnahmen zur elektronischen Entstörung im einzelnen dargestellt. Für die sensorische Erfassung werden die folgenden Zustandsgrößen ausgewählt:
'Ein'
'Aus'
'Verschweißt'
'Überstromauslösung'
'Kurzschlußauslösung'

Die Realisierung erfolgt durch die Positionsüberwachung
- der Schaltwelle hinsichtlich der Zustände mechanisch 'Ein', 'Aus' und 'Verschweißt',
- der Klinke des Unterspannungsauslösers hinsichtlich einer Überstromauslösung und
- der Kurzschlußauslösewelle hinsichtlich der Kurzschlußauslösung.

Zur Überwachung wird die Position mechanisch angekoppelter, mitbewegter Gebermagnete mit anisotropen magnetoresistiven Sensoren erfaßt. Die überwachte Position wird durch das Sensorsignal repräsentiert, wobei - im ungestörten Fall - der Sensor bei ausreichender Annäherung eines Gebermagneten am Signalausgang von 0 auf 1 - Signal schaltet und beim Entfernen des Gebermagneten wieder 0 - Signal anzeigt.

Die zur Erfassung der Schaltzustände notwendigen Schaltungsänderungen der Figur 6 gegenüber Figur 3 der WO-A-9607192 betreffen im einzelnen den Schaltungsbereich 500 mit der elektronischen Entstörung und Signalinvertierung der Sensorsignale, die zusätzliche Erfassung der 'Aus'-Schaltstellung und die Sperrung der Überstromanzeige während der Schaltstellung 'Ein'.

Bei Schaltvorgängen werden diese Sensorsignale in einer bestimmten zeitlichen Reihenfolge durchlaufen. Eine gestörte und daher nicht korrekte Anzeige eines oder mehrerer Sensoren wird daran erkannt, daß die vorgegebene zeitliche Signalfolge nicht eingehalten wird.

Von den fünf aufgeführten Schaltzuständen werden die drei ersten Zustände als stationäres Signal erfaßt, während die Überstrom - und die Kurzschlußauslösung als transiente Signalzustände auftreten und zu ihrer Erfassung gespeichert werden müssen. Die elektronische, aktive Entstörung der stationären und der transienten Sensorsignale erfolgt auf unterschiedliche Weise. Gemeinsam ist eine passive Entstörung, bei der die räumlichen Sensorbereiche durch eine metallische Abschirmung (Fe/Cu) gegen elektromagnetische Felder geschützt werden. Der Zweck der passiven Entstörung besteht darin, daß erst bei einem genügend starken Störsignal das Sensorsignal verfälscht wird. Bei der Abschirmung der verwendeten magnetoresistiven Sensoren erzeugt das Magnetfeld von kurzschlußstromdurchflossenen, benachbarten Stromleitern eine Störung des Sensorsignals. Derartige Störereignisse treten aber nur für kurze Zeit auf und können durch die, im folgenden für zwei separate Anwendungen beschriebene Schaltlogik eliminiert werden.

### 1. Entstörung der stationären Sensorsignale 'Ein', 'Aus' und 'Verschweißt':

Der stationäre Charakter dieser Signale wird dadurch berücksichtigt, daß bei der Ausgabe auf einer optischen Anzeige oder einem Bussystem während eines zurückliegenden Zeitintervalls kein Signalwechsel aufgetreten sein darf. Hierzu wird das Sensorsignal mit einer vorgegebenen Taktfrequenz abgetastet und das Ausgabesignal dem Sensorsignal gleichgesetzt, wenn sich dieses über eine bestimmte Anzahl von Takten nicht verändert hat.

Gemäß Figur 3 enthält eine einfache, digitale Entstörschaltung ein Dual-D-Flip-Flop, das über ein EXKLUSIV-ODER-Glied verknüpft ist und alle 100 ms durch einen Setzpuls angesteuert wird. Diese Flip-Flop-Schaltung speichert das am Dateneingang anliegende Signal nur dann, wenn zwischen dem vorhergehenden und dem momentanen Speicherzeitpunkt kein Signalwechsel erfolgt.

Die Schaltung besteht aus dem 'Eingangs'-Flip-Flop 1 mit einem R-C-Verzögerungsglied am Q-Ausgang, einem EXKLUSIV-ODER-Schaltglied und dem 'Ausgangs'-Flip-Flop 3. Das EXKLUSIV-ODER-Schaltglied dient dem Vergleich des aktuellen und des vorletzten gespeicherten Datensignals des 'Eingangs'-Flip-Flop's 1. Unterscheiden sich beide Datensignale, so wird der Clock-Eingang des 'Ausgangs'-Flip-Flop's 3 gesperrt und sein Speicherinhalt bleibt unverändert. Nimmt man für die Schaltzustandserkennung an, daß eine Störung weniger als 100 ms andauert, so kann man für die am Clock-Eingang anliegenden Setzpulse zum Beispiel eine Pulslänge von 50 µs und eine Wiederholfrequenz von 10 Hz sowie für die R-C-Verzögerungszeit 1 ms vorgeben. Die angezeigten Zustandssignale sind dann mit den ungestörten Zustandssignalen identisch. Bei einem regulären Wechsel der Zustandssignale wird dieser 100 - 200 ms später angezeigt.

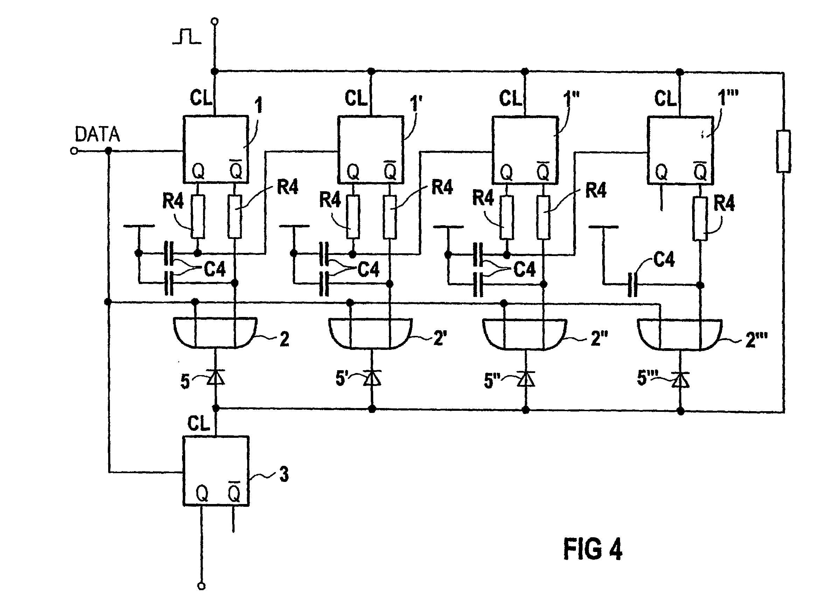

In Figur 4 ist die Flip-Flop-Schaltung gemäß Figur 3 durch eine Kaskade von 'Eingangs'-Flip-Flop's 1', 1'', ... erweitert. Bei n-1 'Eingangs'-Flip-Flop's und einem 'Ausgangs' - Flip-Flop 3 wird das am Dateneingang anliegende Signal dann vom 'Ausgangs'-Flip-Flop 3 gespeichert, wenn es sich bei n aufeinanderfolgenden Speicherzeitpunkten nicht geändert hat.

Ein Wechsel des Datensignals am ersten 'Eingangs'-Flip-Flop 1 wird mit den nachfolgenden Setzpulsen durch die gesamte Kaskade der weiteren 'Eingangs'-Flip-Flop's 1', 1'', ... geschoben. Bei einem gestörten Datensignal .... 1 - 1 - 1 - 0 - 1 - 1 .... (anstatt 1 - 1 - 1 - 1 - 1 - 1 ....) sperrt das erste 'Eingangs'-Flip-Flop 1 über das zugehörige EXKLUSIV-ODER-Schaltglied 2 den Clock-Eingang des 'Ausgangs'-Flip-Flop's 3 beim Signalwechsel 1 - 0 und 0 - 1. Bei den nachfolgenden Setzpulsen sperrt nun das jeweils nächste 'Eingangs'-Flip-Flop 1' über sein EXKLUSIV-ODER-Schaltglied 21 den Clock-Eingang des 'Ausgangs' - Flip-Flop's 2. Die Ausgänge der EXKLUSIV-ODER-Schaltglieder 2, 2', 2'', ... sind so über Dioden 5, 5', 5'', ... am Clock-Eingang angeschlossen, daß 'Tiefsignal' dominiert. Nach dem Durchlauf aller 'Eingangs'-Flip-Flop's wird der Clock-Eingang für den folgenden Setzpuls freigegeben und das Datensignal im 'Ausgangs'-Flip-Flop 3 gespeichert.

Eine gleichwertige, prozessorgesteuerte Entstörlogik besteht aus n Eingangs-Speicherzellen, die den aktuellen und (n-1) zurückliegende Signalzustände enthalten, und einer Ausgangs-Speicherzelle. Bei jedem Meßtakt werden die Speicherinhalte der erste bis (n-1)te Speicherzelle in die Speicherzellen 2 bis n weitergeschoben und das aktuelle Datensignal im vorangehenden Speicher abgelegt. Stimmen die Speicherinhalte aller n Speicherzellen überein, so wird das aktuelle Datensignal auch im Ausgangs-Speicher abgelegt.

Meßtakt und Zahl der Eingangs-Speicher sind so gewählt, daß eine angenommene, maximale Stördauer von zum Beispiel 100 ms überstrichen wird. Der Ausgangs-Speicher zeigt daher das ungestörte Schaltzustandssignal an.

### 2. Entstörung der transienten Sensorsignale 'Überstromauslösung' und 'Kurzschlußauslösung'

### 2.1. Überstromauslösung:

Überwacht der Überstromsensor direkt oder indirekt die - zeitlich träge - Bimetallauslenkung, so erhält man eine störsichere Anzeige, indem das Sensorsignal durch eine Schaltung gemäß Figur 3 oder 4 entstört wird. Dieser Fall liegt bei der realisierten Schaltzustandserkennung des Leistungsschalters vor. Das entstörte Sensorsignal wird in einer Auswerteschaltung gemäß Figur 6 von einem zugeordneten Flip-Flop dauerhaft gespeichert und angezeigt, sofern nicht gleichzeitig ein Kurzschlußereignis erfaßt wurde.

Die Erfassung eines Überstroms kann u.U. auch an erheblich schneller reagierenden Komponenten des Schaltschlosses als einem Bimetall erfolgen. Ein Beispiel ist die Klinkenbewegung eines Leitungsschutzschalters, die innerhalb eines Zeitintervalls von weniger als 10 ms erfolgt. Eine einfache Entstörung, wie bei stationären Signalen durch Auswertung des zeitlichen Signalverhaltens, ist hier nicht mehr möglich. Vielmehr erfolgt eine vorübergehende Speicherung einer möglichen Überstromauslösung, welche bei Nichtbestätigung wieder gelöscht wird.

Dazu wird das Überstrom-Sensorsignal mit dem gemäß Figur 3 bzw. 4 entstörten 'Ein'-Signal UND-verknüpft, um im Ausschaltzustand des Schaltgerätes ein fehlerhaftes Ansprechen der Überstromanzeige auszuschließen. Im Ansprechzustand des Überstromsensors setzt die Auswerteschaltung gemäß Figur 6 beim Signalwechsel (ja → nein) des nichtentstörten 'Ein'-Signals das zugehörige Flip-Flop. Damit erfolgt eine vorläufige Speicherung einer möglichen Überstromauslösung bei gleichzeitiger Unterbrechung der Signalausgabe während eines Zeitintervalls. Dieses ist (mit zum Beispiel 300 ms) so bemessen, daß bei tatsächlicher Überstromauslösung sicher ein Signalwechsel (ja → nein) des entstörten 'Ein'-Signals eintritt. Fällt dieser Signalwechsel aus, so wird am Ende dieses Zeitintervalls das 'Überstrom'-Flip-Flop zurückgesetzt und die Überstromerfassungseinrichtung in Bereitschaft gebracht.

### 2.2. Kurzschlußauslösung

Eine Kurzschlußauslösung kann im Einschaltzustand (Schaltung 0) oder beim Einschaltvorgang (Schaltung C - 0) erfolgen. Dabei wird der Kurzschlußsensor kurzzeitig angesteuert, das heißt beim Leistungsschalter durch die Positionserfassung der Kurzschlußauslösewelle, bei einem Leitungsschutzschalter zum Beispiel durch Magnetfelderfassung am Magnetauslöser. Eine Entstörung durch mehrfache Abfrage des Sensorsignals innerhalb eines vorgegebenen Zeitintervalls nach Figur 3 bzw. 4 ist daher hier nicht möglich.

Im Fall der Kurzschlußschaltung 0 (entspr. open) wird das Sensorsignal in einem zugeordneten Flip-Flop vorübergehend gespeichert, jedoch die Signalausgabe während eines vorgegebenen Zeitintervalls gesperrt. Durch die Abfrage des entstörten 'Ein'-Signals am Ende dieses Zeitintervalls wird geprüft, ob sich das Schaltgerät noch im Einschaltzustand befindet. Bei Bestätigung wird das 'Kurzschluß'-Flip-Flop zurückgesetzt und die Kurzschlußerfassungseinrichtung in Bereitschaft gebracht.

Im Fall der Kurzschlußschaltung C - 0 (entspr. close - open) wird beim Leistungsschalter die Schaltwelle von der Aus-Position in die Zwischenposition 'verschweißt' bewegt, bei welcher die Schaltkontakte die Hauptstrombahnen schließen und den Kurzschluß einleiten. Dieser, zum Beispiel durch Handbetätigung ausgeführte Vorgang benötigt eine Zeitspanne von 30 - 40 ms. Diese Eigenschaft kann zur Entstörung eingesetzt werden, indem bei einem Signalwechsel 'ja → nein' des 'Aus'-Sensors ein um 20 ms verzögert wechselndes Signal zur weiteren Signalverknüpfung abgeleitet wird. Fällt in das 20 ms-Zeitintervall ein Kurzschlußsignal des Sensors, so liegt eine Störung des Kurzschlußsensors vor. In diesem Fall wird der Signalpfad zum 'Kurzschluß'-Flip-Flop für ein vorgegebenes Zeitintervall, zum Beispiel 200 ms, gesperrt.

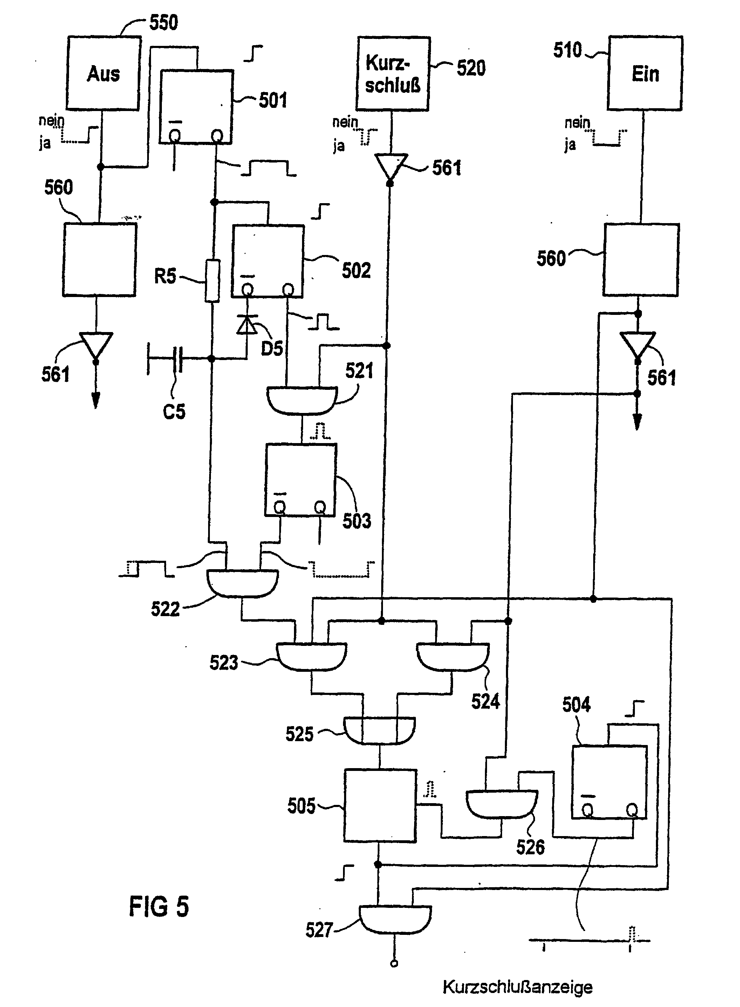

In Figur 5 sind zur besseren Übersichtlichkeit die einzelnen Einheiten mit 500'er Bezugszeichen versehen. Im einzelnen bedeuten hier 510, 520 und 550 Sensoren für elektrisch 'Ein', 'Kurzschluß' und elektrisch 'Aus', die den Einheiten 10, 20 und 50 der Figur 6 entsprechen. Zwei identischen Entstörschaltungen 560 mit jeweils nachgeschalteten invertierenden Buffern 561 sind gemäß Figur 3 oder Figur 4 ausgebildet und liefern Ausgangssignale zur Weiterverarbeitung. In Figur 5 werden die Signale zusätzlich mit dem Signal für Kurzschluß verknüpft.

Den drei Signalwegen sind vier Multivibratoren 501 bis 504 zugeordnet, die jeweils in geeigneter Weise über Und-Glieder 521, 522 und 526 verknüpft sind. Es sind Und-Glieder 521, 523 (Und-Glied I), 524 (Und-Glied II), ein EXKLUSIV-Oder-Glied 525 und ein Flip-Flop 505 vorhanden, der mit dem vierten Multivibrator 504 über das Und-Gliedern 526 verknüpft ist. Vom Und-Glied 527 wird das entstörte Ausgangssignal ausgegeben.

Bei der Schaltung zur Entstörung der Kurzschlußanzeige gemäß Figur 5 wird im bekannten Blockschaltbild durch die UND-Schaltglieder 523 und 524 das Signal des Kurzschlußsensors entweder mit einer 'C - 0'-Schaltung (I) oder einer '0'-Schaltung (II) verknüpft.

### I. 'C - 0'-Schaltung:

Der Signalwechsel des 'Aus'-Sensors (ja → nein) wird durch eine nachfolgende Zeitstufe mit 100 ms auf 1 Mal pro 100 ms begrenzt. Dadurch wird vermieden, daß bei einer tatsächlichen Kurzschlußschaltung der Signalpfad zum Flip-Flop-Speicher 505 gesperrt wird.

Durch eine weitere Zeitstufe mit 20 ms und ein RC-Glied, beispielsweise RC = 1 ms, wird eine lückenlose Signalverschiebung um 20 ms erreicht. Während dieser Zeit ist der Signalpfad durch das UND-Glied 523 gesperrt. Über den Q-Ausgang der Zeitstufe 502 wird ein Kurzschluß-Signalpfad über das nachgeschaltete UND-Glied 521 freigegeben und bei Auftreten eines Kurzschlußsignals durch eine dritte Zeitstufe 503 ein 200 ms-Sperrpuls erzeugt, da in diesem Fall das Kurzschlußsignal als Störung zu betrachten ist. Während des Einschaltzustandes des Schaltgerätes ist das UND-Schaltglied 523 über eine Signalleitung vom entstörten 'Ein'-Sensor dauerhaft gesperrt.

### '0' - Schaltung

Im Einschaltzustand des Schaltgerätes werden über den 'Ein'-Sensor die Signalpfade des UND-Schaltgliedes 524 und des UND-Gliedes 526 für das Rücksetzen des 'Kurzschluß'-Flip-Flop's 505 freigegeben, sowie das UND-Glied 527 für die Kurzschlußanzeige gesperrt. Liefert der Kurzschlußsensor nun ein Kurzschlußsignal, so wird das Flip-Flop 505 gesetzt. Das Flip-Flop 505 schaltet eine Zeitstufe 504, die 300 ms später einen Rücksetzpuls ausgibt. Ist zu diesem Zeitpunkt das entstörte und invertierte 'Ein'-Signal im Zustand 'nein', so wird das Rücksetzsignal über das der Zeitstufe 504 nachgeschaltete UND-Glied 526 gesperrt und das Flip-Flop 505 bleibt 'gesetzt'. Im anderen Fall wird das Flip-Flop 505 'zurückgesetzt' und die Kurzschlußanzeige zeigt weiterhin 'nein' an. Zusammenfassend werden die Eigenschaften der passiven und aktiven Entstörung von Signalen zur Schaltzustandserkennung anhand von Beispielen und der zugehörigen Auswertestrategie dargestellt.

Bei Anwendung der Entstörschaltungen der Figuren 3 bis 5 auf die an sich bekannte Schaltung gemäß Figur 6 ergeben sich entsprechende Modifikationen der einzelnen Überwachungseinheiten. Am Beispiel der Figur 5 sind hierzu Entstörschaltungen 560 zwischen den Sensoren und den einzelnen invertierenden Buffern 561 zwischengeschaltet.

Allgemein gilt, daß jedes der genannten Sensorsignale 'Ein', 'Aus', 'Verschweißt', 'Überstrom' und 'Kurzschluß' über eine zugeordnete Entstörschaltung und einen invertierenden Buffer geführt wird. Dies ist in Figur 6 durch den Schaltungsbereich 500 symbolisch dargestellt. Die bereits erwähnte Strukturierung in den Ebenen I bis V der Figur 6 gilt parallel für die Einheit 10 zur Erfassung der Schaltstellung "Ein", für die Einheit 20 zur Erfassung von "Kurzschluß", für die Einheit 30 zur Erfassung von "Überstrom", für die Einheit 40 zur Erfassung der Schaltwellenstellung "Verschweißt" und für die Einheit 50 zur Erfassung der Schaltstellung "Aus". Im einzelnen sind dem der Signalentstörung dienenden Schaltungsbereich 500 jeweils Impulsformer 11, 21, 31, 41, 51 nachgeschaltet. Es sind Multivibratoren 12, 60, 64, 70 vorhanden, die gemäß Figur 6 mit FLIP-FLOPS 22, 32, UND-Schaltgliedern 52, 62, 63, 74 und NAND-Schaltgliedern 53, 61 verschaltet sind. Den Buffern 13, 23, 33, 43, 53 folgen die Anzeigeeinheiten 14, 24, 34, 44, 54 mit Leuchtdioden.

Abschließend werden die Eigenschaften der passiven und aktiven Entstörung von Signalen zur Schaltzustandserkennung zusammen mit der angewandten Auswertestrategie zusammengefaßt:

### I. Auswerteproblematik bei nachfolgend skizzierten Fallbeispielen

### Beispiel 1

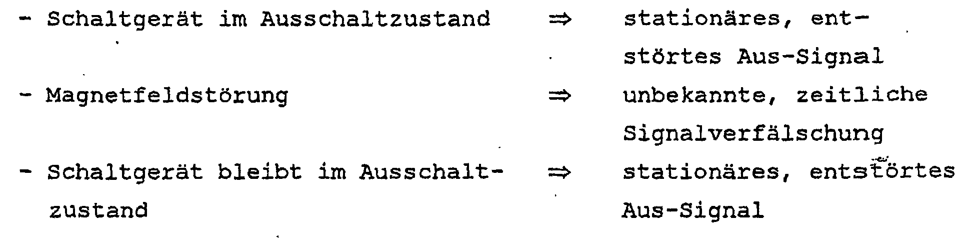

### Beispiel 2

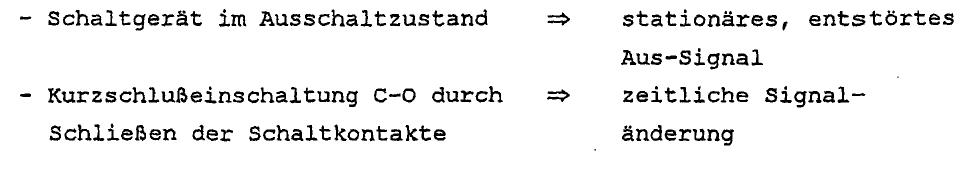

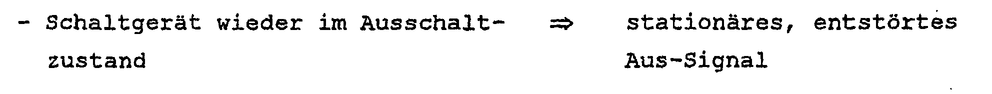

### Beispiel 3

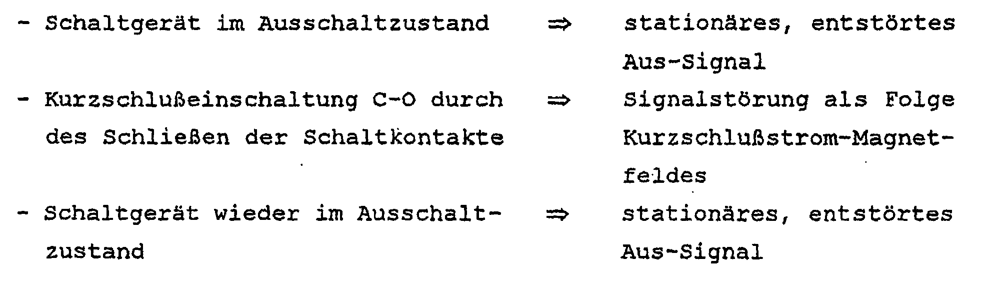

II. Durch passive Entstörung der Magnetosensorik gegen Magnetfeldstörungen in Schaltanlagen wird erreicht, daß die Stördauer aufgrund der notwendigen Störamplitude weniger als 200 Millisekunden betragen kann.

### III. Auswertestrategie

### 1. Voraussetzung der Einfehlersicherheit:

Keine Gleichzeitigkeit einer Kurzschlußeinschaltung. (Dauer < 100 ms) und einer unabhängigen, fremden Magnetfeldstörung (Dauer < 200 ms). Die Wahrscheinlichkeit von Zweifachfehlern wird also als vernachlässigbar eingestuft.

### 2. Strategie der aktiven Entstörung

Bei Beginn der mechanischen Kurzschlußeinschaltung dürfen - wegen der Einfehlersicherheit - die dynamischen Sensorsignale als ungestört angesehen werden. Als dynamische Sensorsignale werden die unmittelbar vom Sensor abgegebenen, nicht entstörten Spannungssignale verstanden. Der Signalwechsel des 'Aus'-Sensors ja→nein liefert daher den Beginn der mechanischen Betätigung.

Unter der Voraussetzung, daß außer den genannten Sensoren ('Ein', 'Aus', 'Verschweißt', 'Überstrom' und 'Kurzschluß') keine weiteren Sensoren zur Signalerfassung (z.B. Stromwandler für Kurzschlußerfassung) vorhanden sind, gibt es nur eine **einzige** Lösung, um zwischen einem wahren und einem falschen Kurzschlußsignal unterscheiden zu können:
- Beim wahren Kurzschlußsignal tritt dieses mehr als 20 ms nach dem dynamischen Signalwechsel des 'Aus'-Sensors ja→nein auf.
- Beim falschen Kurzschlußsignal wird auf Grund des gleichzeitigen Einwirkens des Störmagnetfeldes auf die vorhandenen Sensoren der dynamische Signalwechsel des 'Aus'-Sensors und des 'Kurzschluß'-Sensors etwa gleichzeitig (Δt « 10 ms) auftreten.

Unter der Voraussetzung, daß man sich auf die angegebene Funktion der Sensoren beschränkt und keine weiteren Mittel zur Entstörung eingesetzt werden, stellt obige Strategie die einzige Lösung für die Entstöraufgabe dar.

## Patentansprüche

1. Verfahren zur Überwachung von Zustandsparametern bei einem Schaltgerät, vorzugsweise Überwachung von Schaltstellung, Auslöseursachen und/oder Gerätestörungen, durch sensorische Erfassung und Auswertung geeigneter Signale, wobei Sensoren verwendet werden, die durch externe elektrische und/oder magnetische Felder gestört werden, und wobei durch Auswertung der zeitlichen Signalfolge der Sensorsignale bestimmt wird, ob ein gestörtes oder ein ungestörtes Signal vorliegt, und wobei eine Entstörung der Sensorsignale derart erfolgt, daß Auswertesignale generiert werden, die den ungestörten Zuständen der Sensorsignale entsprechen, mit folgenden Verfahrensschritten:
a) die Sensoren erzeugen stationäre Signale für die Schaltzustände 'Ein', 'Aus' sowie 'Verschweißt' und transiente Signale für die Schaltzustände 'Überstromauslösung' sowie 'Kurzschlußauslösung',
b) ein stationäres Sensorsignal wird mit einer vorgegebenen Taktfrequenz abgetastet und es wird das Ausgabesignal dem Sensorsignal gleichgesetzt, wenn sich dieses über eine bestimmte Anzahl von Takten nicht verändert hat,
c) ein transientes Sensorsignal, das ein Überstromsensor durch direkte oder indirekte Überwachung einer zeitlich trägen Bimetallauslenkung im Schaltgerät erzeugt, wird mit einer vorgegebenen Taktfrequenz abgetastet und es wird das Ausgabesignal dem Sensorsignal gleichgesetzt, wenn sich dieses über eine bestimmte Anzahl von Takten nicht verändert hat, wobei das Ausgabesignal in einer Auswerteschaltung dauerhaft gespeichert wird,
d) ein transientes Sensorsignal einer schneller als das Bimetall reagierenden Komponente des Schaltschlosses, z.B. Bewegung des Klinkenhebels oder der Auslösewelle, wird vorübergehend gespeichert und bei Nichtbestätigung wieder gelöscht, wobei durch logische Verknüpfung mit nicht entstörten und mit entstörten Sensorsignalen geprüft wird, ob das transiente Sensorsignal zu bestätigen oder nicht zu bestätigen ist,
e) der Signalpfad eines transienten Sensorsignals wird durch logische Verknüpfung freigegeben oder gesperrt und/oder es wird ein vorrübergehend gespeichertes transientes Sensorsignal dauerhaft gespeichert oder gelöscht.

2. Verfahren nach Anspruch 1, **dadurch gekennzeichnet, daß** vorgegebene, transiente Zustandssignale, z.B. Kurzschlußauslösung, über ein definiertes zeitliches Signalmuster vorgegebener Sensorsignale als ungestörtes oder gestörtes Zustandssignal bewertet werden und der Signalpfad im Falle einer erkannten Störung gesperrt und/oder ein vorläufig gespeichertes transientes Zustandssignal gelöscht wird, wodurch von den transienten Zustandssignalen die entstörten transienten Zustandssignale abgeleitet werden.

3. Verfahren nach Anspruch 2, **dadurch gekennzeichnet, daß** die entstörten transienten Zustandssignale, z.B. Überstromauslösung und/oder Kurzschlußauslösung, gespeichert werden und nur das übergeordnete Zustandssignal, z.B. Kurzschlußauslösung, angezeigt wird.

4. Einrichtung zur Durchführung des Verfahrens nach Anspruch 1 oder einem der Ansprüche 2 bzw. 3, wobei einem Schaltgerät Mittel zur Überwachung von Zustandsparametern, wie Schaltstellung, Auslöseursachen und/oder Gerätestörungen zugeordnet sind, wozu Sensoren zur Erfassung von für den Schaltzustand signifikanten Signalen vorhanden sind, die durch externe elektrische und/oder magnetische Felder gestört werden mit Mitteln zur Auswertung der zeitlichen Signalfolge der Sensorsignale und Bestimmung, ob ein gestörtes oder ein ungestörtes Signal vorliegt und daß den Sensoren (121, 131) Mittel für eine passive Entstörung (111, 1-3,5, 501-561) einerseits und eine aktive Entstörung andererseits zugeordnet sind, mit denen Auswertesignale generiert werden, die den ungestörten Zuständen der Sensorsignale entsprechen, mit Mitteln für folgende Funktionen :
a) die Sensoren erzeugen stationäre Signale für die Schaltzustände 'Ein', 'Aus' sowie 'Verschweißt' und transiente Signale für die Schaltzustände 'Überstromauslösung' sowie 'Kurzschlußauslösung',
b) ein stationäres Sensorsignal wird mit einer vorgegebenen Taktfrequenz abgetastet und es wird das Ausgabesignal dem Sensorsignal gleichgesetzt, wenn sich dieses über eine bestimmte Anzahl von Takten nicht verändert hat,
c) ein transientes Sensorsignal, das ein Überstromsensor durch direkte oder indirekte Überwachung einer zeitlich trägen Bimetallauslenkung im Schaltgerät erzeugt, wird mit einer vorgegebenen Taktfrequenz abgetastet und es wird das Ausgabesignal dem Sensorsignal gleichgesetzt, wenn sich dieses über eine bestimmte Anzahl von Takten nicht verändert hat, wobei das Ausgabesignal in einer Auswerteschaltung dauerhaft gespeichert wird,
d) ein transientes Sensorsignal einer schneller als das Bimetall reagierenden Komponente des Schaltschlosses, z.B. Bewegung des Klinkenhebels oder der Auslösewelle, wird vorübergehend gespeichert und bei Nichtbestätigung wieder gelöscht, wobei durch logische Verknüpfung mit nicht entstörten und mit entstörten Sensorsignalen geprüft wird, ob das transiente Sensorsignal zu bestätigen oder nicht zu bestätigen ist,
e) der Signalpfad eines transienten Sensorsignals wird durch logische Verknüpfung freigegeben oder gesperrt und/oder es wird ein vorrübergehend gespeichertes transientes Sensorsignal dauerhaft gespeichert oder gelöscht.

5. Einrichtung nach Anspruch 4, **dadurch gekennzeichnet, daß** die Mittel für eine passive Entstörung geeignete Abschirmungen (111) sind.

6. Einrichtung nach Anspruch 5, **dadurch gekennzeichnet, daß** als Mittel für eine passive Entstörung gegen elektromagnetische Störfelder Abschirmbleche aus ferromagnetischem und/oder nichtferromagnetischem Material mit hoher elektrischer Leitfähigkeit verwendet werden.

7. Einrichtung nach Anspruch 4, **dadurch gekennzeichnet, daß** die Mittel für eine aktive Entstörung eine elektronische Schaltung sind.

8. Einrichtung nach Anspruch 7, **dadurch gekennzeichnet, daß** die elektronische Schaltung das Auftreten einer Störung der Sensorik an einem als fehlerhaft vordefiniertem Signalmuster der Sensorsignale erkennt.

9. Einrichtung nach Anspruch 8, **dadurch gekennzeichnet, daß** als Signalmuster einer Störung die momentanen Sensorsignale der verschiedenen Sensoren und/oder die zeitlichen Verläufe der Sensorsignale ausgewertet werden.

10. Einrichtung nach einem der vorhergehenden Ansprüche, **dadurch gekennzeichnet, daß** durch die Kombination der Mittel zur passiven Entstörung mit den Mitteln zur aktiven Entstörung Störereignisse mit ausreichender Stärke innerhalb eines vorgebbaren Zeitintervalls beendet werden.

11. Einrichtung nach einem der vorhergehenden Ansprüche, **dadurch gekennzeichnet, daß** von den Sensoren (121, 123) erfaßte Änderungen der Zustandsparameter vorübergehend gespeichert werden und bei der Erkennung einer Störung innerhalb eines vorgebbaren Zeitintervalls die alten Werte der Zustandsparameter beibehalten werden.

## Claims

1. Method for monitoring state parameters in a switching device, preferably monitoring switch position, tripping causes and/or device faults, by recording and evaluating suitable signals, whereby sensors are used which are interrupted by external electrical and/or magnetic fields, and whereby by evaluating the time signal sequence of the sensor signals it is possible to determine whether an interrupted or a non-interrupted signal is present, and whereby interference suppression of the sensor signals takes place such that evaluation signals are generated which correspond to the non-interrupted states of the sensor signals, with the following process steps:
a) the sensors generate stationary signals for the switching states 'On', 'Off' and 'Welded' and transient signals for the switching states 'Overcurrent tripping' and 'Short-circuit tripping',
b) a stationary sensor signal is sampled at a predetermined pulse frequency, and the output signal is equated with the sensor signal if the latter has not changed over a given number of clock pulses,
c) a transient sensor signal which generates an overcurrent sensor by direct or indirect monitoring of a time-delayed bimetallic deflection in the switching device is sampled at a predetermined pulse frequency and the output signal is equated with the sensor signal if the latter has not changed over a given number of clock pulses, whereby the output signal is permanently stored in an evaluation circuit,
d) a transient sensor signal of a component, which reacts faster than the bimetal, of the latching mechanism, e.g. movement of the latch or of the tripping shaft, is temporarily stored and deleted again if no confirmation is received, whereby as a result of logical linkage with non-interference-suppressed and with interference-suppressed sensor signals it is possible to check whether the transient sensor signal should be confirmed or not,
e) the signal path of a transient sensor signal is released or blocked as a result of logical linkage and/or a temporarily stored transient sensor signal is permanently stored or deleted.

2. Method according to Claim 1, **characterised in that** predetermined, transient state signals, e.g. short-circuit triggering, are evaluated via a defined time signal pattern of predetermined sensor signals as an uninterrupted or interrupted state signal and the signal path is blocked in the event of an identified interruption and/or a temporarily stored transient state signal is deleted, as a result of which it is possible to derive the interference-suppressed transient state signals from the transient state signals.

3. Method according to Claim 2, **characterised in that** the interference-suppressed transient state signals, e.g. overcurrent triggering and/or short-circuit triggering, are stored and only the higher-level state signal, e.g. short-circuit triggering, is displayed.

4. Device for carrying out the method according to Claim 1 or one of Claims 2 or 3, whereby a switching device has associated means for monitoring state parameters, such as switch position, tripping causes and/or device faults, to which end sensors are provided for recording signals which are significant for the switching state and which are interfered with by external electrical and/or magnetic fields with means for evaluating the time signal sequence of the sensor signals and of determining of whether an interrupted or a non-interrupted signal is present, and that the sensors (121, 131) have associated means for passive interference suppression (111, 1-3,5, 501-561) on the one hand, and active interference suppression on the other hand, with which evaluation signals are generated which correspond to the non-interrupted states of the sensor signals, with means for the following functions:
a) the sensors generate stationary signals for the switching states 'On', 'Off' and 'Welded' and transient signals for the switching states 'Overcurrent tripping' and 'Short-circuit tripping',
b) a stationary sensor signal is sampled at a predetermined pulse frequency, and the output signal is equated with the sensor signal if the latter has not changed over a given number of clock pulses,
c) a transient sensor signal which generates an overcurrent sensor by direct or indirect monitoring of a time-delayed bimetallic deflection in the switching device is sampled at a predetermined pulse frequency and the output signal is equated with the sensor signal if the latter has not changed over a given number of clock pulses, whereby the output signal is permanently stored in an evaluation circuit,
d) a transient sensor signal of a component, which reacts faster than the bimetal, of the latching mechanism, e.g. movement of the latch or of the tripping shaft, is temporarily stored and deleted again if no confirmation is received, whereby as a result of logical linkage with non-interference-suppressed and with interference-suppressed sensor signals it is possible to check whether the transient sensor signal should be confirmed or not,
e) the signal path of a transient sensor signal is released or blocked as a result of logical linkage and/or a temporarily stored transient sensor signal is permanently stored or deleted.

5. Device according to Claim 4, **characterised in that** the means for passive interference suppression are suitable shields (111).

6. Device according to Claim 5, **characterised in that** the means for passive interference suppression against electromechanical interference fields are shielding plates made of ferromagnetic and/or non-ferromagnetic material with high electrical conductivity.

7. Device according to Claim 4, **characterised in that** the means for active interference suppression are an electronic circuit.

8. Device according to Claim 7, **characterised in that** the electronic circuit identifies the occurrence of interference in the sensor equipment from a signal pattern for the sensor signals which has been predefined as being incorrect.

9. Device according to Claim 8, **characterised in that** the present sensor signals from the various sensor signals and/or the waveforms from the sensor signals are evaluated as an interference signal pattern.

10. Device according to one of the preceding claims, **characterised in that** the combination of means for passive interference suppression with means for active interference suppression ends interference events of sufficient intensity within a predeterminable time interval.

11. Device according to one of the preceding claims, **characterised in that** state parameter changes recorded by the sensors (121, 123) are temporarily stored and, if interference is identified within a predeterminable time internal, the old values of the state parameters are retained.

## Revendications

1. Procédé pour la surveillance de paramètres d'état dans un appareil de commutation, de préférence pour la surveillance de positions de commutation, de causes de déclenchement et/ou de perturbations d'appareil, par détection sensorielle et évaluation de signaux appropriés, dans lequel on utilise des capteurs qui sont perturbés par des champs électriques et/ou magnétiques externes, dans lequel on détermine par évaluation de la succession temporelle des signaux de capteurs si on a un signal perturbé ou un signal non perturbé et dans lequel on met en oeuvre un antiparasitage des signaux de capteurs en produisant des signaux d'évaluation qui correspondent aux états non perturbés des signaux de capteurs, avec les étapes de procédé suivantes :
a) les capteurs produisent des signaux stationnaires pour les états de commutation "branchement", "débranchement" ainsi que "soudé" et des signaux transitoires pour les états de commutation "déclenchement par surintensité de courant" ainsi que "déclenchement par court-circuit",
b) un signal de capteur stationnaire est échantillonné avec une fréquence d'horloge prédéterminée et le signal de sortie est mis au niveau du signal de capteur si celui-ci n'a pas varié pendant un certain nombre de cycles d'horloge,
c) un signal de capteur transitoire, que produit un capteur de surintensité de courant par surveillance directe ou indirecte d'une déviation de bilame lente dans l'appareil de commutation, est échantillonné avec une fréquence d'horloge prédéterminée et le signal de sortie est mis au niveau du signal de capteur si celui-ci n'a pas varié pendant un certain nombre de cycles d'horloge, le signal de sortie étant mémorisé durablement dans un circuit d'évaluation,
d) un signal de capteur transitoire d'un élément, réagissant plus vite que le bilame, du verrou de maintien, par exemple le mouvement du levier de cliquet ou de l'arbre de déclenchement, est mémorisé temporairement et à nouveau effacé en cas de non-confirmation, la combinaison logique avec des signaux de capteurs non déparasités et avec des signaux de capteurs déparasités permettant de tester si le signal de capteur transitoire est ou n'est pas à confirmer,
e) le chemin d'un signal de capteur transitoire est libéré ou bloqué par combinaison logique et/ou un signal de capteur transitoire mémorisé temporairement est mémorisé durablement ou effacé.

2. Procédé selon la revendication 1, **caractérisé par le fait que**, sur un modèle temporel défini de signaux de capteurs prédéterminés, on évalue des signaux d'état transitoires prédéterminés, par exemple le déclenchement par court-circuit comme étant un signal d'état non perturbé ou un signal d'état perturbé et, si on a détecté une perturbation, on bloque le chemin de signal et/ou on efface un signal d'état transitoire mémorisé temporairement, ce qui fait que les signaux d'état transitoires déparasités sont déduits des signaux d'état transitoires.

3. Procédé selon la revendication 2, **caractérisé par le fait qu'**on mémorise les signaux d'état transitoires déparasités, par exemple déclenchement par surintensité de courant et/ou déclenchement par court-circuit, et qu'on n'affiche que le signal d'état de rang supérieur, par exemple déclenchement par court-circuit.

4. Dispositif pour la mise en oeuvre du procédé selon la revendication 1 ou selon l'une des revendications 2 ou 3, dans lequel il est associé à un appareil de commutation des moyens pour la surveillance de paramètres d'état, comme les positions de commutation, les causes de déclenchement et/ou les perturbations d'appareil, ce pour quoi il est prévu des capteurs qui sont destinés à la détection de signaux significatifs de l'état de commutation et qui sont perturbés par des champs électriques et/ou magnétiques externes, avec des moyens pour évaluer la succession temporelle des signaux de capteurs et pour déterminer s'il y a un signal perturbé ou un signal non perturbé, et dans lequel il est associé aux capteurs (121, 131) des moyens qui sont destinés à un antiparasitage passif (111, 1 à 3, 5, 501 à 561) d'une part et à un antiparasitage actif d'autre part et avec lesquels sont produits des signaux d'évaluation qui correspondent aux états non perturbés des signaux de capteurs, avec des moyens pour les fonctions suivantes :
a) les capteurs produisent des signaux stationnaires pour les états de commutation "branchement", "débranchement" ainsi que "soudé" et des signaux transitoires pour les états de commutation "déclenchement par surintensité de courant" ainsi que "déclenchement par court-circuit",
b) un signal de capteur stationnaire est échantillonné avec une fréquence d'horloge prédéterminée et le signal de sortie est mis au niveau du signal de capteur si celui-ci n'a pas varié pendant un certain nombre de cycles d'horloge,
c) un signal de capteur transitoire, que produit un capteur de surintensité de courant par surveillance directe ou indirecte d'une déviation de bilame lente dans l'appareil de commutation, est échantillonné avec une fréquence d'horloge prédéterminée et le signal de sortie est mis au niveau du signal de capteur si celui-ci n'a pas varié pendant un certain nombre de cycles d'horloge, le signal de sortie étant mémorisé durablement dans un circuit d'évaluation,
d) un signal de capteur transitoire d'un élément, réagissant plus vite que le bilame, du verrou de maintien, par exemple le mouvement du levier de cliquet ou de l'arbre de déclenchement, est mémorisé temporairement et à nouveau effacé en cas de non-confirmation, la combinaison logique avec des signaux de capteurs non déparasités et avec des signaux de capteurs déparasités permettant de tester si le signal de capteur transitoire est ou n'est pas à confirmer,
e) le chemin d'un signal de capteur transitoire est libéré ou bloqué par combinaison logique et/ou un signal de capteur transitoire mémorisé temporairement est mémorisé durablement ou effacé.

5. Dispositif selon la revendication 4, **caractérisé par le fait que** les moyens destinés à un antiparasitage passif sont des blindages appropriés (111).

6. Dispositif selon la revendication 5, **caractérisé par le fait que**, comme moyens destinés à un antiparasitage passif contre des champs parasitaires électromagnétiques, on utilise des tôles de blindage en un matériau ferromagnétique et/ou non ferromagnétique ayant une grande conductibilité électrique.

7. Dispositif selon la revendication 4, **caractérisé par le fait que** les moyens destinés à un antiparasitage actif sont un circuit électronique.

8. Dispositif selon la revendication 7, **caractérisé par le fait que** le circuit électronique détecte l'apparition d'une perturbation de l'unité sensorielle sur un modèle, prédéfini comme erroné, des signaux de capteurs.

9. Dispositif selon la revendication 8, **caractérisé par le fait qu'**on évalue comme modèle de signal d'une perturbation les signaux momentanés des différents capteurs et/ou les allures temporelles des signaux de capteurs.

10. Dispositif selon l'une des revendications précédentes, **caractérisé par le fait que** la combinaison des moyens destinés à l'antiparasitage passif et des moyens destinés à l'antiparasitage actif permet de terminer des événements perturbateurs d'intensité suffisante en un intervalle de temps pouvant être prescrit.

11. Dispositif selon l'une des revendications précédentes, **caractérisé par le fait que** des variations, détectées par les capteurs (121, 123), des paramètres d'état sont mémorisées temporairement et, lors de la détection d'une perturbation pendant un intervalle de temps pouvant être prescrit, les anciennes valeurs des paramètres d'état sont conservées.
